# EUROPEAN PATENT SPECIFICATION

(11) **EP 2 706 419 B1**
(45) Date of publication and mention of the grant of the patent: **04.12.2019**
(21) Application number: 12006303.7
(22) Date of filing: 07.09.2012
(51) Int. Cl.: G05B 19/042

(54) **Method and system for bay typical based IEC 61850 engineering and integration**
Verfahren und System für Engineering und Integration von IEC 61850 basierten Steuerungen
Procédé et système pour ingénierie et intégration de données de baies basées sur CEI 61850

(43) Date of publication of application: 12.03.2014
(73) Proprietor: ABB Schweiz AG, 5400 Baden (CH)
(72) Inventor: Libuda, Lars, 40880 Ratingen (DE); Büker, Horst, 32423 Minden (DE); Erning, Peter, 68782 Brühl (DE)
(74) Representative: Marks, Frank

(56) References cited:
- WO-A1-2012/003724
- US-A1- 2012 099 478
- "Efficient Energy Automation with the IEC 61850 Standard Application Examples", , 31 December 2010 (2010-12-31), XP055054858, Retrieved from the Internet: URL:http://www.energy.siemens.com/br/pool/ hq/energy-topics/standards/iec-61850/Appli cation_examples_en.pdf [retrieved on 2013-02-28]

## Description

The invention relates to a method for bay type based IEC 61850 engineering and integration, used in an automation plant, and is provided to distribute functional parts of each bay type across tools by using unique identifiers. This invention regards also a system using the method for bay type based IEC 61850 engineering and integration.

### Background of the invention:

In the process automation and power generation businesses the engineering of the automation solutions based on the standard IEC 61850 for integrated process and power automation by using control and protection devices, also called Intelligent Electronic Devices (IED), and these devices need to be connected to a central automation system for data exchange.

IEC 61850 is an Ethernet-based international standard for communication in the power generation facilities and electric power transformation substations to integrate all of the protection, control, measurement and monitoring functions within a substation or a sub-network and to provide the intelligent electronic devices for the highspeed substation protection applications, interlocking and intertripping.

The engineering of a solution for a power automation part in the power generation facilities and electric power transformation substations is characterized by the usage of many different tools for different purposes from different organizational units, and complex and highly iterative workflows. Often it is required that project specific solutions are created from scratch and for each individual component within the project.

### Statement of Problem

Engineering solutions for the power automation part with the characteristics as described in the previous section is inefficient because high level components for engineering are not available and it is often impossible to reuse solutions created for one project in a similar different project.

For example in power generation facilities or in electric power transformation substations a substation consists of closely connected subparts with some common functionality. Examples are the switchgear between an incoming or outgoing line and a busbar, the bus coupler with its circuit breaker and related isolators and earthing switches, the transformer with its related switchgear between the two busbars representing the two voltage levels. A bay concept is provided to apply to one and a half breaker and ring bus substation arrangements by grouping the primary circuit breakers and associated equipment into a virtual bay. These bays comprise a power system subset to be protected such as a transformer or a line end, and the control of its switchgear has some common restrictions such as mutual interlocking or well-defined operation sequences. The identification of such subparts is important for maintenance purposes or for extension plans, e.g. what is added if a new line is to be linked in. These subparts are called bays and may be managed by devices with the generic name "bay controller" and have protection systems called "bay protection". The concept of a bay is described in IEC 61850-1 standard.

### Description of the invention:

This invention provides a new solution for engineering the power automation part which is characterized by usage of many different purposes from different organizational units and by a simplified top-down engineering workflow as proposed by the standard IEC 61850. In addition specific solutions are created based on high level reusable components, so called bay types using unique identifiers.

The new method for bay type based IEC 61850 engineering and integration consists of a concept for bay types which distributes functional parts of each bay type across the tools and an identification of a tool's specific functional part of a bay type based on a unique identifier with a version index for a life cycle support within the tool.

Typical tools are an IEC 61850 IED configuration tools, a process controller configuration tools, an alarm/event configuration tools and a DCS operations configuration tools.

The new method is also provided for top-down engineering. In a top-down approach an overview of the system is formulated, specifying but not detailing any first-level subsystems and each subsystem is then refined in yet greater detail, sometimes in many additional subsystem levels until the entire specification is reduced to base elements. The new method is based on the bay types and nested types for engineering integrated process and power automation solutions.

The inventive method for bay type based IEC 61850 engineering and integration across tools, using unique identifiers (UI), renders engineering a solution for power automation more efficient.

The new method uses a bay type catalogue which contains the bay types. All available bay types from the bay type catalogue are loaded by a master tool. Within the master tool the required bays for the automation plant are instantiated from the available bay types and a complete system configuration description is created.

The master tool memorizes the bay type from which each bay was instantiated by storing the bay types Unique Identifier with version index within the instantiated bay.

During an export of the system configuration description into a system configuration description file, all bays along with their attached unique identifiers and version index are stored in the file, which finally contains a list of all bay instances with assigned bay types from which it was created.

During an import of the system configuration description file by an importing slave tool, the bays are scanned by the slave tool and the assigned unique identifiers with a version index are read. This allows the slave tool to identify the correct bay type.

After identification of the correct bay type, the tool is provided to access and import its own configuration part from the bay type catalogue for the bay to be configured.

The invention regards also a system using the method for bay type based IEC 61850 engineering and integration, which is characterized by the usage of many different tools for different purposes from organizational units and by a simplified top-down engineering workflow as proposed by the standard IEC 61850. The inventive system is provided to distributed functional parts of each bay type across the tools by using unique identifiers.

The inventive system includes an IEC 61850 master tool, which loads all available bay types from the bay type catalogue and is used for top-down engineering. The master tool interacts with slave tools e.g. an IEC 61850 IED configuration tool, a process controller configuration tool, an alarm/event configuration tool and a DCS operations configuration tool. The slave tools are used to configure the details of the components as engineered in the master tool. The master tool and the slave tools are all denoted as engineering tools and both tools could be part of the engineering workflow, but each tool has specific functionality, The master tool is provided for common engineering and the slave tool assigned engineering specifics.

The master tool memorizes the bay type from which each bay was instantiated by storing the bay types unique identifier with version index within the instantiated bay.

During an export of the system configuration description into a system configuration description file, all bays along with their attached unique identifiers and version index, are stored, so that the file finally contains a list of all bays with assigned bay types.

During an import of the system configuration description file an importing slave tool scans the bays and reads the assigned unique identifiers and optional with a version index to allow the slave tool to identify the correct bay type.

After an identification of the correct bay type, the slave tool accesses and imports its own configuration part from the bay type catalogue to configure the bay's component covered by the tool.

In summary, to apply the new method and system for bay type based engineering the following requirements are fulfilled:
- A bay type catalogue is provided and contains several bay types, wherein each bay type consists of a unique identifier with a version index and tool specific parts describing component configurations relevant for a bay instantiated from the bay type.
- A master tool is provided in which the system configuration takes place and which fulfills the following requirements:
   - The master tool is provided to import and export the complete bay type catalogue.
   - The master tool allows instantiations of bays from bay types,
   - The master tool is provided to store a unique identifier with a version index of the bay type along with each bay instantiated from this bay type.
   - The master tool is provided to export a system configuration description file which contains an assignment of bays to their respective bay type.
- Several slave tools exist which import the system configuration description file as basis for component specific configurations and fulfill the following requirements:
   - Each slave tool is provided to support component specific configurations based on some sort of templates.
   - Each slave tool is provided to read a bay types unique identifier with a version index, accessing the bay type catalogue, and importing the tool specific template from the identified bay type.

### Benefits of the Invention

With the new method and system for bay type based IEC 61850 engineering and integration uses unique identifiers, engineering a solution for the power automation part becomes more efficient.

In case of using protection and control devices, also called intelligent electronic device (IED's) in a project's power automation part a top down engineering as proposed by IEC 61850 is realized,

By generalizing the type based approach, it is possible to create high level automation components to be used in automation engineering, like e.g. a component describing a feed-water pump in a thermal power plant consisting of an electrical part for power supply and an automation part for control and monitoring of the pump. Using this approach, engineering solutions for integrated process and power automation will be based on the same concept.

### Brief Description of the Drawings

The subject matter of the invention as well as advantageous refinements and improvements of the invention will be described and explained in more detail using the exemplary embodiments illustrated in the following drawings, in which:
- **Fig.** 1: shows an exemplary single line diagram of medium voltage switchgear for power distribution in a plant,
- **Fig.** 2: shows an exemplary single bay in context with different automation system components,
- **Fig.** 3: shows tools in an engineering solution for an exemplary power automation part in a power plant including data exchange,
- **Fig.** 4: shows an exemplary setup of a bay type for a motor feeder,
- **Fig.** 5: shows a the method for engineering with bay types based on a bay type catalogue access exemplary depicted for the IEC 61850 system configuration tool and the IEC 61850 IED configuration tool,
- **Fig.** 6: depicts a generalization of the example shown in figure 5, and
- **Fig.** 7: shows alternative solutions or variations of the invention.

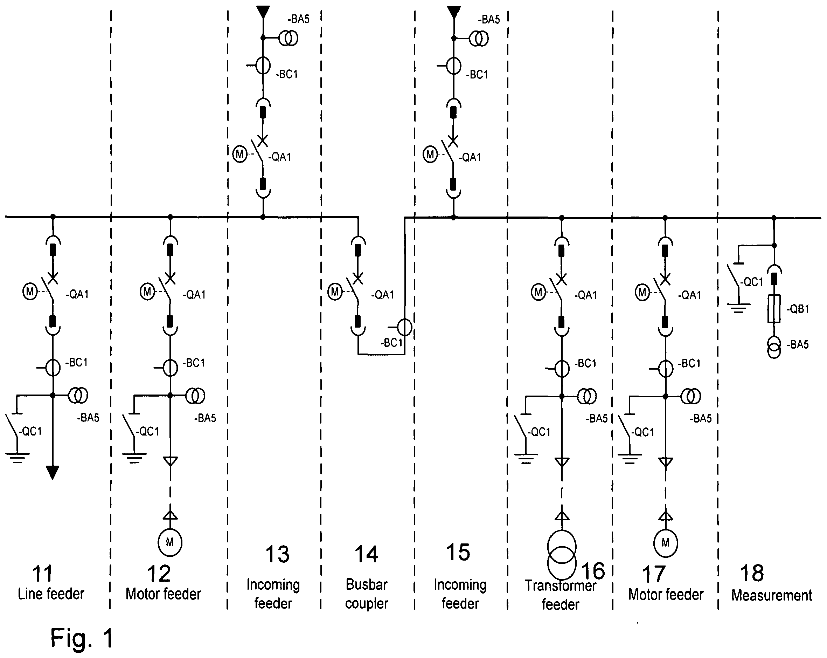

**Figure** 1 presents an exemplary single line diagram of medium voltage switchgear for power distribution in a plant. In the state of the art average medium voltage switchgear for power distribution in a plant usually consists of approximately 100 bays which are based on 10 different bay types.

The medium voltage switchgear shown in figure 1 is composed of several bays 11, 12, 13, 14, 15, 16, 17, 18, separated by slashed lines. Each bay holds primary equipment like circuit breakers, disconnectors, earthing switches, current and voltage transformers for measurement, etc. and serves a particular electrical application purpose as denoted below each bay. Within medium voltage switchgear, there may be several bays having the same electrical application purpose, like a motor feeder 12, 17 or an incoming feeder 13, 15, shown in Fig. 1.

All bays 11, 12, 13, 14, 15, 16, 17, 18 serving the same electrical application purpose are instances of a same bay type, so there are usually less Bay types for the medium voltage switchgear than bays.

For protection, remote control and supervision of the primary equipment in medium voltage switchgear each bay 11, 12, 13, 14, 15, 16, 17, 18 has to be equipped with appropriate control and protection devices (IEDs) and these devices need to be connected to a central automation system for data exchange. This solution is called power automation.

In real projects, many bays 11, 12, 13, 14, 15, 16, 17, 18 are connected to one process controller 20 and one Data Acquisition and Alarm/Event Server 21. Data exchange between the intelligent electronic devices IED, process controller 20, Data Acquisition and Alarm/Event Server 21 and the operation station 22 is realized by Industrial Ethernet network(s) IEN.

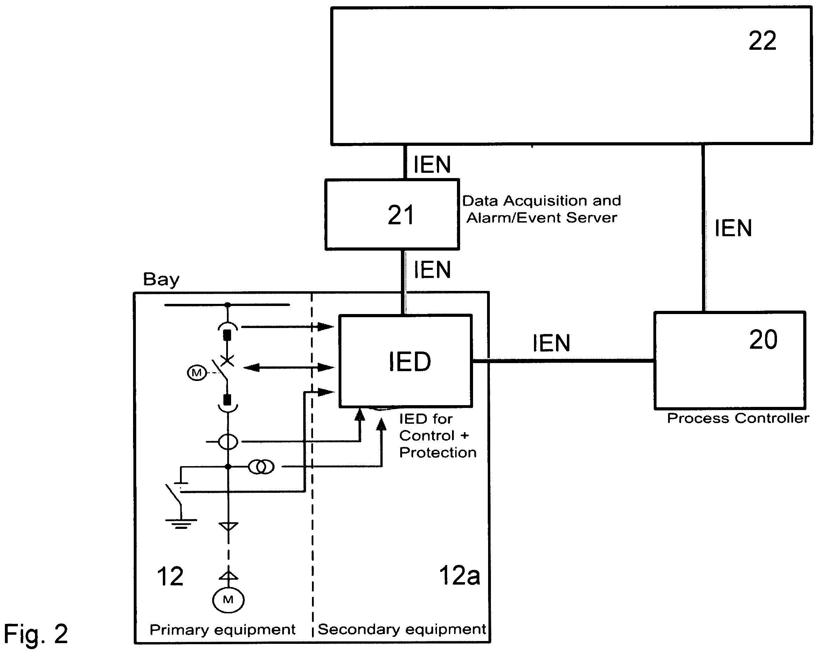

**Figure** 2 depicts a single bay "Motor feeder" 12 as shown in figure 1 in the context of different automation system components, like a process controller 20, a data acquisition and alarm/event server 21 and an operation station 22.

In this example the bay 11 is equipped with one or several intelligent electronic devices IED responsible for control and protection of the primary equipment contained in the bay 12. All equipment serving control and protection purposes within the bay 12 are denoted as secondary equipment 12a. For remote control and supervision, the intelligent electronic devices IED exchange data with the different components 20, 21, 22 of the automation system over industrial Ethernet IEN. The process controllers 20 take over centralized automation tasks like load shedding. Data Acquisition and Alarm/Event servers provide a gateway to the operator station 22. Operations finally provide the appropriate workplaces (showing operator graphics and faceplates) for remote control and supervision of the medium voltage switchgear. Usually several (circa 80 -100) intelligent electronic devices IED are connected to one data acquisition and alarm/event server 21 and to one process controller 20.

According the state of the art the engineering of the solution as shown in Fig. 2 requires different tools for different purposes to implement a plant's power automation part.

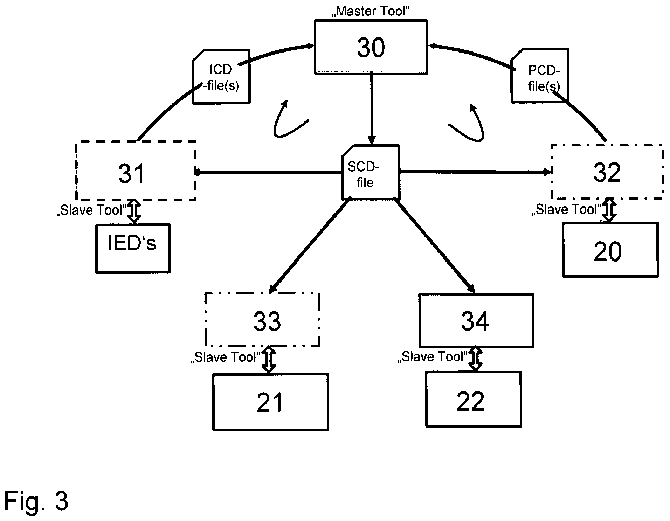

**Figure** 3 depicts tools used to engineer the power automation part for a plant including data exchange between the IED's and the automation system components 20, 21, 22. The IEC 61850 system configuration tool 30 acts as "Master tool". All the other tools, like IEC 61850 IED configuration tool 31, process controller configuration tool 32, alarm and event configuration tool 33, and DCS operations configuration tool 34 are required to configure the different components IED's 20, 21, 22, shown in figure 2 and are denoted as "Slave tools".

The IEC 61850 system configuration tool 30 is provided to specify a plant's power distribution including primary equipment, IEDs, communication network, and data exchange between IEDs themselves, IEDs and process controllers 20, as well as between IEDs and alarm and event system 21. The IEC 61850 IED configuration tool 31 provides the IED capability descriptions as input to the IEC 61850 system configuration tool 30 and configures the IED instances as specified within the IEC 61850 system configuration tool 30. The process controller configuration tool 32 is provided to configure the process controller 20 as IED and provide its IED capability description as input to the IEC 61850 system configuration tool 30 and to configure the process controller's data exchange with IEDs as specified within the IEC 61850 system configuration tool 30. The DCS operations configuration tool 34 is provided to configure the data presentation and operations part of the distributed automation system as specified within the IEC 61850 system configuration tool 30 and the alarm and event configuration tool 33 is provided to configure alarms and events based on communication between IEDs and process automation system as specified within the IEC 61850 system configuration tool 30. So the IEC 61850 system configuration tool 30 acts as a "Master tool" and consumes input ICD- files from the IEC 61850 IED configuration tool describing the capabilities of the IEDs as well as input PCD-files from the process controller configuration tool describing the capabilities of the process controller 20, Based on this input, the complete power distribution part of the plant is specified within the IEC 61850 system configuration tool 30. This specification is finally exported in the system configuration description file SCD.

The specification consists of the following parts:
- specification of all bays 11, 12, 13, 14, 15, 16, 17, 18 as single line diagram and their assigned primary equipment contained in a medium voltage switchgear (compare to Fig, 1),
- specification of all IEDs contained in each bay 11, 12, 13, 14, 15, 16, 17, 18 for control, measurement, protection and power management purposes,
- communication network setup with all IEDs, process controllers 20 and data acquisition and alarm/event equipment 21 connected to it,
- Data flow, i.e. data exchange between IEDs, process Controllers 20 and data acquisition and alarm/event equipment 21.

The system configuration description (SCD)- file is imported by the other involved tools, called "Slave Tools" 31, 32, 33, 34 and serves as basis to configure the different components IED, 20, 21, 22. Because the system configuration description file does not contain all details required to completely configure each component, in each tool additional configuration (carried out manually) has to take place.

Currently, the engineering takes place on bay level, i.e. each bay 11, 12, 13, 14, 15, 16, 17, 18 has to be engineered separately and in case of changes affecting the system configuration description file, the configuration of all components has to be repeated manually for each bay. This renders engineering inefficient.

The following figures show an inventive solution to make the engineering more efficiently. The main idea behind the invention is to do the engineering on bay type level and instantiate the different bays 11, 12, 13, 14, 15, 16, 17, 18 automatically, instead of doing the engineering on bay level instances.

To stay with the figures given in Fig. 1, only 10 bay types would have to be engineered per medium voltage switchgear instead of 100 bays and changes made to a bay type could be propagated to all of its instances (bays) automatically. Additionally the data presentation, operations section and the alarm/ event configuration will be achieved. This increases engineering efficiency in a favorable way.

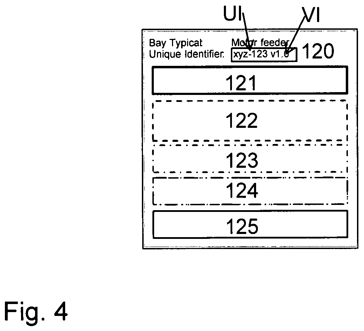

The basis for the invention is a concept for bay types covering the configuration required for all involved components (see figure 2) addressed in their respective engineering tools (see Fig. 3). Following the components shown in figure 2, a bay type consists of the parts depicted in the following figure 4.

**Figure** 4 shows an exemplary setup of a bay type 120 for a motor feeder. According to the invention each bay type is identified by a unique identifier UI and/or a version index VI, exemplary for a life cycle support and consists of several parts, e.g. a bay layout template incl. primary equipment and data definitions 121, an IED configuration template incl. control, measurement, protection and power management function 122, a function block/bay control module 123, an alarm/event configuration template 124 and/or a bay object type including graphics, elements and faceplate 126.

Each part (templates, function block, object type) 121, 122, 123, 124, 125 covers the complete configuration for a bay derived from the bay type 120 within each tool involved in engineering (e.g. the part bay layout template 121 matches the system configuration tool 30, the part IED configuration template 122 matches the configuration tool 31, the part function block/bay control module 123 matches the process controller configuration tool 32, the part alarm/event configuration template 124 matches the alarm and event configuration tool 33 and the part of DCS operations configuration tool 34 matches the elements and faceplate 125 in fig. 3).

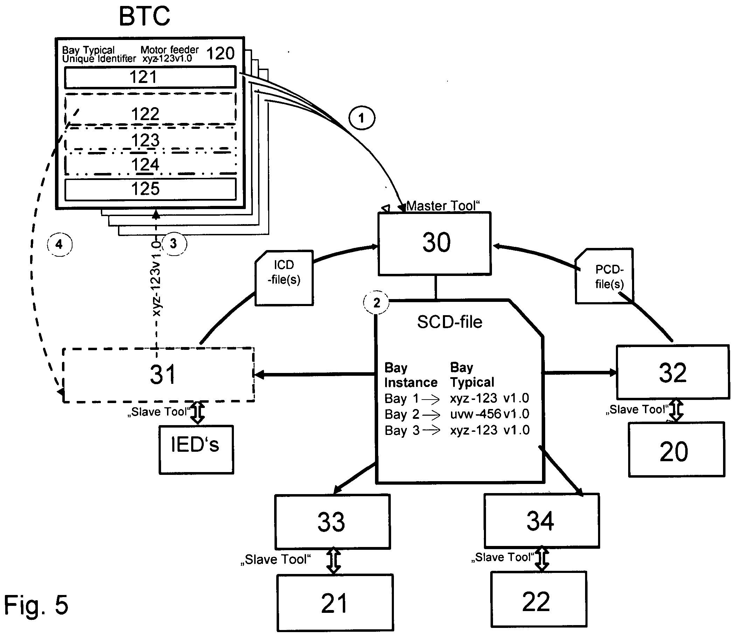

**Figure** 5 shows a method for engineering with bay types based on a bay type catalogue access exemplary depicted for the IEC 61850 system configuration tool 30 and the IEC 61850 IED configuration tool 31. A bay type catalog BTC consists of a plurality of bay types 120.

To cover complete medium voltage switchgear, the catalogue BTC with different bay types 120 is defined. The bay type catalogue BTC is then accessed by the engineering tools as depicted in figure 5 for the IEC 61850 system configuration tool 30 and the IEC 61850 IED configuration tool 31. All remaining tools 32, 33, 34 access the bay type catalogue BTC in the same way like depicted for the IEC 61850 IED configuration tool 31.

The new method for engineering based on the bay types 120 follows the following approach:
In in a preferred step the engineering starts by creating or adapting the bay type catalogue BTC relevant for a project.

In first step 1 the IEC 61850 system configuration tool 30, as a master tool, loads all available bay types 120 from the bay type catalogue BTC and offers them for engineering. Then all required bays 11, 12, 13, 14, 15, 16, 17, 18 for medium voltage switchgear are instantiated from the available bay types to complete the system configuration. The tool memorizes the bay type 120 from which each bay 11, 12, 13, 14, 15, 16, 17, 18 was instantiated by storing the bay types Unique Identifier UI with version index VI within the instantiated bay along with each bay's specific configuration.

During the export of the system configuration description file from the system configuration, all bays 11, 12, 13, 14, 15, 16, 17, 18 along with their attached unique identifiers UI and version index VI are stored in the file in the second step 2. So the file contains a list of all bays 11, 12, 13, 14, 15, 16, 17, 18 with assigned bay types.

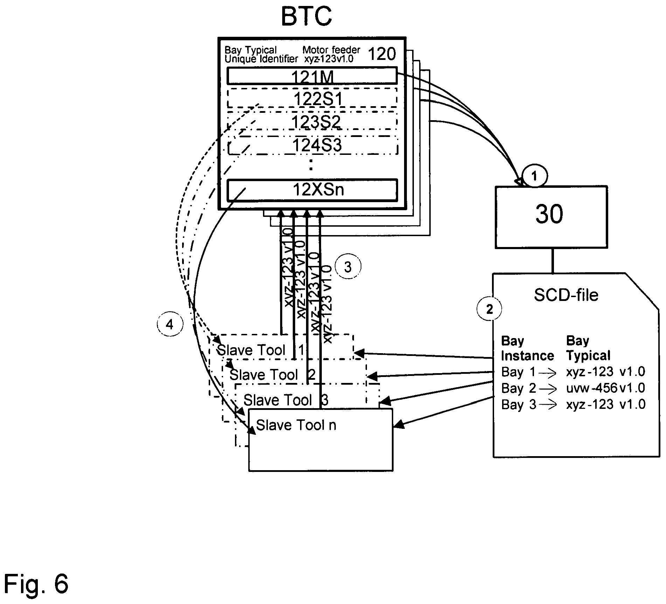

In a next step 3 during import of the system configuration description file SCD into a slave tool 31, the slave tool 31 scans the bays 11, 12, 13, 14, 15, 16, 17, 18 and reads the assigned unique identifiers UI. With the unique identifiers UI the slave tool 31 accesses the correct bay type in the bay type catalogue BTC for each bay 11, 12, 13, 14, 15, 16, 17, 18. (Step 3 in Fig. 5 as depicted for the IEC 61850 IED configuration tool 31; the same applies to all other tools as process controller configuration tool 32, alarm and event configuration tool 33 and DCS operations configuration tool 34 - see figure 6).

After identification of the correct bay type, the slave tool 31 imports its own configuration part from the bay type catalogue BTC for the bays 11, 12, 13, 14, 15, 16, 17, 18 (step 4 in Fig. 5 as depicted for the IEC 61850 IED configuration tool 31; the same applies to all other tools as process controller configuration tool 32, alarm and event configuration tool 33 and DCS operations configuration tool 34 - see figure 6).

**Figure** 6 depicts a generalization of the example shown in figure 5. The inventive method and system can be applied to all areas where a system specification is carried out in a master tool 30 and the different system components are configured using different slave tools 1, 2, 3 ... n by using the master tool configuration 121M, the first slave tool configuration data template 122S1, the second slave tool configuration data template 123S2, the third configuration data template 124S3 and so on to the n-th slave tool configuration data template 12XSn integrated in the bay type catalogue BTC.

Instead of a "Bay Type Catalogue" BTC, one can speak of a generic "Object Type Catalogue" and instead of a "Bay Type" the term "Object Type" can be used. The term "bay" is finally replaced by "object". The requirements given at the end of the previous section stay valid using the rephrasing introduced above.

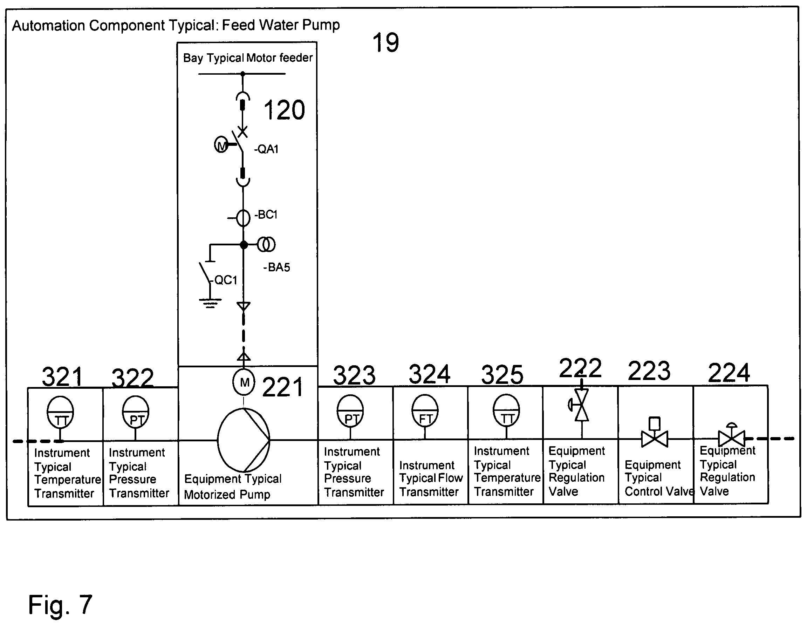

**Figure** 7 refers to alternative solutions or variations of the invention using the example of an automation component type. The automation component type "Feed Water Pump" 19 consists of nested types from different domains.

The electrical part of the "Feed Water Pump" is represented by a bay type "Motor Feeder" 120 introduced in Fig. 4. The process equipment is represented by equipment types for a motorized pump 221 and different types of valves 222, 223, 224. Finally, measurements are represented by different instrument types 321, 322, 323, 324, 325. How the components represented by these nested types are interconnected and how they are controlled is described in the automation component type 19-

In an alternative embodiment of the invention the type based approach is realized in an integrated engineering framework instead of separate tools. Here, the functionality of the master tool 30 and all slave tools 1, 2, 3 ... n are part of one common framework with centralized data storage.

To engineer solutions for the integrated process and power automation the power automation part as well as the process automation part is considered. Both parts are engineered in a common approach using the following types, all following the generalized idea as sketched in Fig. 6:
- bay types (as introduced in detail in the description of the figures 1 - 5) to represent the electrical part,
- equipment types 221 to represent process equipment,
- instrument types 321, 322, 323, 324, 325 to represent process measurements,
- power management types to balancing power consumption against process outcome.

These types can be nested to create high level automation components, like a feed water pump as shown in figure 7. The resulting "Meta"-Type is denoted as an "Automation Component Type". It represents the equipment, devices, process functionalities, electrical behaviors, and control aspects of such a complex automation component. Automation component types can also be used with the generalized embodiment shown in figure 6. The master tool 30 has just to fulfill one additional requirement. It must be capable to resolve the nested types. Using automation component types during engineering will further reduce engineering effort within a project and allows reuse across projects of similar types like e.g. power plants.

## Claims

1. Method for bay type based IEC 61850 engineering and integration to be used for automation plants, which is provided to distribute functional parts of each bay type (120) across tools (30, 31, 32, 33, 34) by using unique identifiers (UI), whereas an identification of a tool's specific functional part of a bay type (120) is based on the unique identifier (UI),
whereas a bay type catalogue (BTC) for bays (11, 12, 13, 14, 15, 16, 17, 18) with several bay types is provided, and the following steps are executed:
- -all available bay types (120) from the bay type catalogue (BTC) are loaded by an IEC 61850 master tool (30),
- -the required bays (11, 12, 13, 14, 15, 16, 17, 18) for the automation plant are instantiated from the available bay types (120) and a complete system configuration description is created,
- -in the master tool (30) are memorized the bay type (120) from which each bay (11, 12, 13, 14, 15, 16, 17, 18) is instantiated by storing a bay type's unique identifier (UI) with a version index (VI) within the instantiated bay,
- -during an export of the system configuration into a system configuration description file (SCD), all bays (11, 12, 13, 14, 15, 16, 17, 18) along with their attached unique identifiers (UI) and version index (VI) are stored in the file, which contains a list of all bay instances (11, 12, 13, 14, 15, 16, 17, 18) with assigned bay types (120) from which it was created,
- -during an import of the system configuration description file (SCD) into a slave tool (31, 32, 33, 34), the bays (11, 12, 13, 14, 15, 16, 17, 18) are scanned by the slave tool (31, 32, 33, 34) and the assigned unique identifiers (UI) with a version index (VI) are read,
- -with the unique identifiers (UI) the correct bay type (120) in the bay type catalogue (BTC) for each bay (11, 12, 13, 14, 15, 16, 17, 18) is imported from the system configuration description file (SCD) by the slave tool (31, 32, 33, 34),
- -after an identification of the correct bay type (120), the slave tool (31, 32, 33, 34) is provided to access and import its own configuration part from the bay type catalogue (BTC) for the bay (11, 12, 13, 14, 15, 16, 17, 18).

2. Method according to claim 1, whereas the identification of a tool's specific functional part of a bay type (120) based on the unique identifier (UI) together with a version index (VI) for a life cycle support within the tool (30, 31, 32, 33, 34).

3. Method according to claim 1 or 2, whereas the tools are an IEC 61850 system configuration tool (30), an IEC 61850 IED configuration tool (31), a process controller configuration tool (32), an alarm/event configuration tool (33) and a DCS operations configuration tool (34).

4. Method according to any of claims 1 - 2, is based provides on the bay types and nested types for engineering integrated process and power automation solutions.

5. System adapted to bay type based IEC 61850 engineering and integration to be used for automation plants, which is provided to distribute functional parts of each bay type (120) across tools (30, 31, 32, 33, 34) by using unique identifiers (UI), whereas an identification of a tool's specific functional part of a bay type (120) is based on the unique identifier (UI),
- wherein the system containing a master tool (30) which interacts with slave tools (31, 32, 33, 34), whereas
- -the IEC 61850 master tool (30) loads all available bay types (120) from the bay type catalogue (BTC) containing several bay types (120),
- -a complete system configuration description is the result of an instantiation of the required bays (11, 12, 13, 14, 15, 16, 17, 18) for the automation plant from the available bay types (120),
- -the master tool (30) memorizes the bay type (120) from which each bay (11, 12, 13, 14, 15, 16, 17, 18) is instantiated by storing a bay type's unique identifier (UI) with a version index (VI) within the instantiated bay,
- -during the export of the system configuration into a system configuration description file (SCD) all bays along with their attached unique identifiers (UI) and version index (VI) are stored in the file (SCD), so the file (SCD) contains a list of all bay instances (11, 12, 13, 14, 15, 16, 17, 18) with assigned bay types (120), from which it was created,
- -during an import of the system configuration description file (SCD) an importing slave tool (31, 32, 33, 34) scans the bays (11, 12, 13, 14, 15, 16, 17, 18) and reads the assigned unique identifiers (UI) with a version index (VI),
- -with the unique identifiers (UI) the slave tool (31, 32, 33, 34) accesses the correct bay type (120) in the bay type catalogue (BTC) for each bay (11, 12, 13, 14, 15, 16, 17, 18),
- -after an identification of the correct bay type (120), the slave tool (31,32, 33, 34) accesses and imports its own configuration part from the bay type catalogue (BTC) for the bay (11, 12, 13, 14, 15, 16, 17, 18).).

6. System according to claim 5, whereas the system configuration description file (SCD) consists a specification of all bays (11, 12, 13, 14, 15, 16, 17, 18) as a single line diagram and their assigned primary equipment, a specification of all IEDs contained in each bay (11, 12, 13, 14, 15, 16, 17, 18), a communication network setup with all IEDs, process controllers (20) and data acquisition and alarm/event equipment (21) connected to it and a data flow, i.e. data exchange between IEDs, process Controllers (20) and data acquisition and alarm/event equipment (21).

7. System according to any of claims 5 - 6, whereas the master tool (30) is povided to import and export the complete bay type catalogue (BTC), allows instantiations of the bays (11, 12, 13, 14, 15, 16, 17, 18) from the bay types, stores the unique identifier (UI) with the version index (VI) of the bay type along with each bay instantiated from this bay type and exports a system configuration description file (SCD) which contains an assignment of bays (11, 12, 13, 14, 15, 16, 17, 18) to their respective bay type.

8. System according to any of claims 5 - 6, whereas the slave tools (31, 32, 33, 34) import the system configuration description file (SCD) as basis for component specific configurations and fulfill the following requirements:
- each slave tool (31, 32, 33, 34) is provided to support component specific configurations based on some sort of templates, and
- each slave tool (31, 32, 33, 34) is provided to read a bay types unique identifier (UI) with a version index (VI), accessing the bay type catalogue, and importing the tool specific template from the identified bay type.

9. System according to any of claims 5 - 6, whereas the types are bay types to represent the electrical part of the plant, equipment types to represent process equipment, instrument types to represent process measurements and/or power management types to balancing power consumption against process outcome.

10. System according to any of claims 5 - 6, is based provides on the bay types and nested types for engineering integrated process and power automation solutions.

## Patentansprüche

1. Verfahren für feldtypbasierte IEC-61850-Konstruktion und Integration, das für Automatisierungsanlagen zu verwenden ist und vorgesehen ist, um funktionale Teile jedes Feldtyps (120) auf Werkzeuge (30, 31, 32, 33, 34) unter Verwendung eindeutiger Kennungen (UI) zu verteilen, **dadurch gekennzeichnet, dass** eine Identifizierung eines spezifischen funktionalen Teils eines Feldtyps (120) eines Werkzeugs auf der eindeutigen Kennung (UI) beruht,
**dadurch gekennzeichnet, dass** ein Feldtypkatalog (BTC) für Felder (11, 12, 13, 14, 15, 16, 17, 18) mit mehreren Feldtypen bereitgestellt wird, und die folgenden Schritte ausgeführt werden:
- alle verfügbaren Feldtypen (120) aus dem Feldtypkatalog (BTC) werden von einem IEC-61850-Masterwerkzeug (30) geladen,
- die erforderlichen Felder (11, 12, 13, 14, 15, 16, 17, 18) für die Automatisierungsanlage werden von den verfügbaren Feldtypen (120) instanziiert und eine vollständige Systemkonfigurationsbeschreibung wird erstellt,
- im Masterwerkzeug (30) wird der Feldtyp (120), aus dem jedes Feld (11, 12, 13, 14, 15, 16, 17, 18) instanziiert ist, durch Speichern der eindeutigen Kennung (UI) eines Feldtyps mit einem Versionsindex (VI) innerhalb des instanziierten Felds abgespeichert,
- während eines Exports der Systemkonfiguration in eine Systemkonfigurationsbeschreibungsdatei (SCD) werden alle Felder (11, 12, 13, 14, 15, 16, 17, 18) zusammen mit ihren eindeutigen Kennungen (UI) und dem Versionsindex (VI) in der Datei gespeichert, die eine Liste aller Feldinstanzen (11, 12, 13, 14, 15, 16, 17, 18) mit zugewiesenen Feldtypen (120) enthält, aus denen sie erstellt wurde,
- während eines Imports der Systemkonfigurationsbeschreibungsdatei (SCD) in ein Slavewerkzeug (31, 32, 33, 34) werden die Felder (11, 12, 13, 14, 15, 16, 17, 18) vom Slavewerkzeug (31, 32, 33, 34) abgetastet und die zugewiesenen eindeutigen Kennungen (UI) mit einem Versionsindex (VI) werden gelesen,
- mit den eindeutigen Kennungen (UI) wird der richtige Feldtyp (120) im Feldtypkatalog (BTC) für jedes Feld (11, 12, 13, 14, 15, 16, 17, 18) aus der Systemkonfigurationsbeschreibungsdatei (SCD) durch das Slavewerkzeug (31, 32, 33, 34) importiert,
- nach einer Identifizierung des richtigen Feldtyps (120) wird das Slavewerkzeug (31, 32, 33, 34) bereitgestellt, um auf seinen eigenen Konfigurationsteil aus dem Feldtypkatalog (BTC) für das Feld (11, 12, 13, 14, 15, 16, 17, 18) zuzugreifen und diesen zu importieren.

2. Verfahren nach Anspruch 1, **dadurch gekennzeichnet, dass** die Identifizierung eines spezifischen funktionalen Teils eines Feldtyps (120) eines Werkzeugs auf der eindeutigen Kennung (UI) zusammen mit einem Versionsindex (VI) für eine Lebenszyklusunterstützung innerhalb des Werkzeugs (30, 31, 32, 33, 34) beruht.

3. Verfahren nach Anspruch 1 oder 2, **dadurch gekennzeichnet, dass** die Werkzeuge ein IEC-61850-Systemkonfigurationswerkzeug (30), ein IEC-61850-IED-Konfigurationswerkzeug (31), ein Prozesssteuerungskonfigurationswerkzeug (32), ein Alarm-/Ereigniskonfigurationswerkzeug (33) und ein DCS-Betriebskonfigurationswerkzeug (34) sind.

4. Verfahren nach einem der Ansprüche 1-2, beruht bereitstellt auf den Feldtypen und verschachtelten Typen zum Konstruieren integrierter Prozess- und Leistungsautomatisierungslösungen.

5. Für feldtypbasierte IEC-61850-Konstruktion und Integration ausgelegtes System, das für Automatisierungsanlagen zu verwenden ist und vorgesehen ist, um funktionale Teile jedes Feldtyps (120) auf Werkzeuge (30, 31, 32, 33, 34) unter Verwendung eindeutiger Kennungen (UI) zu verteilen, wohingegen eine Identifizierung eines spezifischen funktionalen Teils eines Feldtyps (120) eines Werkzeugs auf der eindeutigen Kennung (UI) beruht,
- wobei das System ein Masterwerkzeug (30) beinhaltet, das mit Slavewerkzeugen (31, 32, 33, 34) wechselwirkt, **dadurch gekennzeichnet, dass**
- das IEC-61850-Masterwerkzeug (30) alle verfügbaren Feldtypen (120) aus dem Feldtypkatalog (BTC) lädt, der mehrere Feldtypen (120) beinhaltet,
- eine vollständige Systemkonfigurationsbeschreibung das Ergebnis einer Instanziierung der erforderlichen Felder (11, 12, 13, 14, 15, 16, 17, 18) für die Automatisierungsanlage aus den verfügbaren Feldtypen (120) ist,
- das Masterwerkzeug (30) den Feldtyp (120), aus dem jedes Feld (11, 12, 13, 14, 15, 16, 17, 18) instanziiert ist, durch Speichern der eindeutigen Kennung (UI) eines Feldtyps mit einem Versionsindex (VI) innerhalb des instanziierten Felds abspeichert,
- während des Exports der Systemkonfiguration in eine Systemkonfigurationsbeschreibungsdatei (SCD) alle Felder zusammen mit ihren eindeutigen Kennungen (UI) und dem Versionsindex (VI) in der Datei (SCD) gespeichert werden, sodass die Datei (SCD) eine Liste aller Feldinstanzen (11, 12, 13, 14, 15, 16, 17, 18) mit zugewiesenen Feldtypen (120) enthält, aus denen sie erstellt wurde,
- während eines Imports der Systemkonfigurationsbeschreibungsdatei (SCD) ein importierendes Slavewerkzeug (31, 32, 33, 34) die Felder (11, 12, 13, 14, 15, 16, 17, 18) abtastet und die zugewiesenen eindeutigen Kennungen (UI) mit einem Versionsindex (VI) liest,
- das Slavewerkzeug (31, 32, 33, 34) mit den eindeutigen Kennungen (UI) auf den richtigen Feldtyp (120) im Feldtypkatalog (BTC) für jedes Feld (11, 12, 13, 14, 15, 16, 17, 18) zugreift,
- nach einer Identifizierung des richtigen Feldtyps (120) das Slavewerkzeug (31, 32, 33, 34) auf seinen eigenen Konfigurationsteil aus dem Feldtypkatalog (BTC) für das Feld (11, 12, 13, 14, 15, 16, 17, 18) zugreift und diesen importiert.

6. System nach Anspruch 5, **dadurch gekennzeichnet, dass** die Systemkonfigurationsbeschreibungsdatei (SCD) aus einer Spezifikation aller Felder (11, 12, 13, 14, 15, 16, 17, 18) als ein einzelnes Liniendiagramm und ihrer zugewiesenen primären Ausrüstung, einer Spezifikation aller IEDs, die in jedem Feld (11, 12, 13, 14, 15, 16, 17, 18) enthalten sind, einer Kommunikationsnetzwerkeinrichtung mit allen IEDs, Prozesssteuerungen (20) und damit verbundener Datenerfassungs- und Alarm-/Ereignisausrüstung (21) und einem Datenfluss, d. h. Datenaustausch zwischen IEDs, Prozessteuerungen (20) und Datenerfassungs- und Alarm-/Ereignisausrüstung (21) besteht.

7. System nach einem der Ansprüche 5-6, **dadurch gekennzeichnet, dass** das Masterwerkzeug (30) vorgesehen ist, den vollständigen Feldtypkatalog (BTC) bereitzustellen, ein Instanziieren der Felder (11, 12, 13, 14, 15, 16, 17, 18) aus den Feldtypen ermöglicht, die eindeutige Kennung (UI) mit dem Versionsindex (VI) des Feldtyps zusammen mit jedem aus diesem Feldtyp instanziierten Feld speichert und eine Systemkonfigurationsbeschreibungsdatei (SCD) exportiert, die eine Zuweisung von Feldern (11, 12, 13, 14, 15, 16, 17, 18) zu ihrem jeweiligen Feldtyp beinhaltet.

8. System nach einem der Ansprüche 5-6, **dadurch gekennzeichnet, dass** die Slavewerkzeuge (31, 32, 33, 34) die Systemkonfigurationsbeschreibungsdatei (SCD) als Grundlage für komponentenspezifische Konfigurationen importieren und die folgenden Anforderungen erfüllen:
- jedes Slavewerkzeug (31, 32, 33, 34) ist vorgesehen, um komponentenspezifische Konfigurationen auf Grundlage einer Art von Vorlagen zu unterstützen, und
- jedes Slavewerkzeug (31, 32, 33, 34) ist vorgesehen, um eine eindeutige Kennung (UI) eines Feldtyps mit einem Versionsindex (VI) zu lesen, wobei es auf den Feldtypkatalog zugreift und die werkzeugspezifische Vorlage vom identifizierten Feldtyp importiert.

9. System nach einem der Ansprüche 5-6, **dadurch gekennzeichnet, dass** die Typen Feldtypen, um den elektrischen Teil der Anlage zu repräsentieren, Ausrüstungstypen, um Prozessausrüstung zu repräsentieren, Instrumententypen, um Prozessmessungs- und/oder Leistungsverwaltungstypen zum Ausgleichen des Leistungsverbrauchs gegenüber Prozessergebnissen zu repräsentieren, sind.

10. System nach einem der Ansprüche 5-6, beruht bereitstellt auf den Feldtypen und verschachtelten Typen zum Konstruieren integrierter Prozess- und Leistungsautomatisierungslösungen.

## Revendications

1. Procédé d'ingénierie et d'intégration CEI 61850 basé sur des types de baie à utiliser pour des installations d'automatisation, qui est conçu pour distribuer des parties fonctionnelles de chaque type de baie (120) à travers des outils (30, 31, 32, 33, 34) en utilisant des identifiants uniques (IU), dans lequel une identification d'une partie fonctionnelle spécifique d'un outil d'un type de baie (120) est basée sur l'identifiant unique (IU),
dans lequel un catalogue de types de baie (CTB) pour des baies (11, 12, 13, 14, 15, 16, 17, 18) contenant plusieurs types de baie disponibles est fourni, et les étapes suivantes sont exécutées:
tous les types de baie disponibles (120) dans le catalogue de types de baie (CTB) sont chargés par un maître-outil CEI 61850 (30),
les baies requises (11, 12, 13, 14, 15, 16, 17, 18) pour l'installation d'automatisation sont instanciées à partir des types de baie disponibles (120) et une description de configuration de système complète est créée,
dans le maître-outil (30) sont mémorisés le type de baie (120) à partir duquel chaque baie (11, 12, 13, 14, 15, 16, 17, 18) est instanciée en stockant un identifiant unique (IU) de type de baie avec un index de version (IV) à l'intérieur de la baie instanciée,
pendant une exportation de la configuration de système dans un fichier de description de configuration de système (FDC), toutes les baies (11, 12, 13, 14, 15, 16, 17, 18) de concert avec leurs identifiants uniques (IU) et index de version (IV) attachés sont stockées dans le fichier, qui contient une liste de toutes les instances de baie (11, 12, 13, 14, 15, 16, 17, 18) avec les types de baie attribués (120) à partir desquels il a été créé,
pendant une importation du fichier de description de configuration de système (FDC) dans un outil asservi (31, 32, 33, 34), les baies (11, 12, 13, 14, 15, 16, 17, 18) sont balayées par l'outil asservi (31, 32, 33, 34) et les identifiants uniques (IU) attribués avec un index de version (IV) sont lus,
avec les identifiants uniques (IU), le type de baie correct (120) dans le catalogue de types de baie (CTB) pour chaque baie (11, 12, 13, 14, 15, 16, 17, 18) est importé à partir du fichier de description de configuration de système (FDC) par l'outil asservi (31, 32, 33, 34), et
après une identification du type de baie correct (120), l'outil asservi (31, 32, 33, 34) est conçu pour accéder à et importer sa propre partie de configuration à partir du catalogue de types de baie (CTB) pour la baie (11, 12, 13, 14, 15, 16, 17, 18).

2. Procédé selon la revendication 1, dans lequel l'identification d'une partie fonctionnelle spécifique d'un outil d'un type de baie (120) est basée sur l'identifiant unique (IU) de concert avec un index de version (IV) pour un support de cycle de vie à l'intérieur de l'outil (30, 31, 32, 33, 34).

3. Procédé selon la revendication 1 ou 2, dans lequel les outils sont un outil de configuration de système CEI 61850 (30), un outil de configuration IED CEI 61850, un outil de configuration de dispositif de commande de processus (32), un outil de configuration d'alarme/événement (33) et un outil de configuration d'opérations DCS (34).

4. Procédé selon l'une quelconque des revendications 1 à 2, est basé fournit sur les types de baie et types imbriqués pour des solutions d'automatisation d'énergie et de processus intégrés d'ingénierie.

5. Système d'ingénierie et d'intégration CEI 61850 basé sur des types de baie à utiliser pour des installations d'automatisation, qui est conçu pour distribuer des parties fonctionnelles de chaque type de baie (120) à travers des outils (30, 31, 32, 33, 34) en utilisant des identifiants uniques (IU), dans lequel une identification d'une partie fonctionnelle spécifique d'un outil d'un type de baie (120) est basée sur l'identifiant unique (IU),
dans lequel le système contient un maître-outil (30) qui interagit avec des outils asservis (31, 32, 33, 34), dans lequel
le maître-outil CEI 61850 (30) charge tous les types de baie disponibles (120) à partir du catalogue de types de baie (CTB) qui contient plusieurs types de baie (120),
une description de configuration de système complète est le résultat d'une instanciation des baies requises (11, 12, 13, 14, 15, 16, 17, 18) pour l'installation d'automatisation à partir des types de baie disponibles (120),
le maître-outil (30) mémorise le type de baie (120) à partir duquel chaque baie (11, 12, 13, 14, 15, 16, 17, 18) est instanciée en stockant un identifiant unique (IU) du type de baie avec un index de version (IV) à l'intérieur de la baie instanciée,
pendant l'exportation de la configuration de système dans un fichier de description de configuration de système (FDC), toutes les baies de concert avec leurs identifiants uniques (IU) et index de version (IV) attachés sont stockées dans le fichier (FDC), le fichier (FDC) contenant de ce fait une liste de toutes les instances de baie (11, 12, 13, 14, 15, 16, 17, 18) avec les types de baie attribués (120) à partir desquels il a été créé,
pendant une importation du fichier de description de configuration de système (FDC), un outil asservi d'importation (31, 32, 33, 34) balaie les baies (11, 12, 13, 14, 15, 16, 17, 18) et lit les identifiants uniques (IU) attribués avec un index de version (IV),
avec les identifiants uniques (IU), l'outil asservi (31, 32, 33, 34) accède au type de baie correct (120) dans le catalogue de types de baie (CTB) pour chaque baie (11, 12, 13, 14, 15, 16, 17, 18), et
après une identification du type de baie correct (120), l'outil asservi (31, 32, 33, 34) accède à et importe sa propre partie de configuration à partir du catalogue de types de baie (CTB) pour la baie (11, 12, 13, 14, 15, 16, 17, 18).

6. Système selon la revendication 5, dans lequel le fichier de description de configuration de système (FDC) consiste en une spécification de toutes les baies (11, 12, 13, 14, 15, 16, 17, 18) sous la forme d'un schéma unifilaire et de leur équipement primaire attribué, une spécification de toutes les IED contenues dans chaque baie (11, 12, 13, 14, 15, 16, 17, 18), un réseau de communication établi avec toutes les IED, des dispositifs de commande de processus (20) et un équipement d'acquisition de données et d'alarme/événement (21) connecté à celui-ci et un flux de données, c'est-à-dire un échange de données entre les IED, les dispositifs de commande de processus (20) et l'équipement d'acquisition de données et d'alarme/événement (21).

7. Système selon l'une quelconque des revendications 5 à 6, dans lequel le maître-outil (30) est conçu pour importer et exporter le catalogue de types de baie (CTB) complet, permettre des instanciations des baies (11, 12, 13, 14, 15, 16, 17, 18) à partir des types de baie, stocker l'identifiant unique (IU) avec l'index de version (IV) du type de baie de concert avec chaque baie instanciée à partir de ce type de baie et exporter un fichier de description de configuration de système (FDC) qui contient une attribution de baies (11, 12, 13, 14, 15, 16, 17, 18) à leur type de baie respectif.

8. Système selon l'une quelconque des revendications 5 à 6, dans lequel les outils asservis (31, 32, 33, 34) importent le fichier de description de configuration de système (FDC) comme base pour des configurations spécifiques de composant et remplissent les exigences suivantes:
chaque outil asservi (31, 32, 33, 34) est conçu pour supporter des configurations spécifiques de composant basées sur plusieurs sortes de modèles, et
chaque outil asservi (31, 32, 33, 34) est conçu pour lire un identifiant unique (IU) de type de baie avec un index de version (IV), accéder au catalogue de types de baie et importer le modèle spécifique d'outil partir du type de baie identifié.

9. Système selon l'une quelconque des revendications 5 à 6, dans lequel les types sont des types de baie qui représentent la partie électrique de l'installation, des types d'équipement qui représentent un équipement de processus, des types d'instrument qui représentent des mesures de processus et/ou des types de gestion d'énergie pour équilibrer la consommation d'énergie par rapport au résultat du processus.

10. Système selon l'une quelconque des revendications 5 à 6, est basé fournit sur les types de baie et types imbriqués pour des solutions d'automatisation d'énergie et de processus intégrés d'ingénierie.
